# EUROPÄISCHE PATENTSCHRIFT

(11) **EP 0 613 565 B1**
(45) Veröffentlichungstag und Bekanntmachung des Hinweises auf die Patenterteilung: **25.09.1996**
(21) Anmeldenummer: 93915693.1
(22) Anmeldetag: 06.08.1993
(51) Int. Cl.: G02B 21/06, G02B 21/08

(54) **BELEUCHTUNGSEINRICHTUNG FÜR MIKROSKOPE**
ILLUMINATION DEVICE FOR MICROSCOPES
DISPOSITIF D'ECLAIRAGE POUR MICROSCOPES

(30) Priorität: 19.09.1992 DE 4231439
(43) Veröffentlichungstag der Anmeldung: 07.09.1994
(73) Patentinhaber: LEICA MIKROSKOPIE UND SYSTEME GmbH, D-35530 Wetzlar (DE)
(72) Erfinder: STANKEWITZ, Hans-Werner, D-35578 Wetzlar (DE); KARBE, Peter, D-35580 Wetzlar (DE)
(74) Vertreter: Stamer, Harald, Dipl.-Phys.
(86) Internationale Anmeldenummer: DE9300696
(87) Internationale Veröffentlichungsnummer: WO9407166

(56) Entgegenhaltungen:
- US-A- 3 679 287
- US-A- 3 799 645
- US-A- 4 063 797
- US-A- 4 163 150
- US-A- 4 253 726
- US-A- 4 384 200

## Beschreibung

Die Erfindung betrifft eine Beleuchtungseinrichtung für Mikroskope mit den Merkmalen des Oberbegriffs des Anspruchs 1.

Es sind Beleuchtungseinrichtungen mit Kondensorrevolvern bekannt, die eine Leuchtfeldblende in gewünschter Vergrößerungsabstimmung in die Objektebene abbilden, um mit den den verschiedenen Kondensoren zugeordneten Objektivvergrößerungen immer die gleiche optimale Anpassung an die Beleuchtung zu erreichen. Nur die stark vergrößernden Objektiven zugeordneten Kondensoren besitzen eine Aperturblende. Nachteilig an dieser Einrichtung ist, daß nach jeder Kondensorrevolverumschaltung zur Erzielung einer Köhlerschen Beleuchtung die Abbildung der Lampenwendel in die Aperturblendenebene durch Verstellen des Kollektors zu jedem Kondensor individuell neu eingestellt werden muss.

Andere Beleuchtungseinrichtungen verwenden Kondensoren, die aus einem Grundkondensor mit verschiedenen, auswechselbar angeordneten Kondensorlinsen aufgebaut sind. Diese auswechselbaren Kondensorlinsen bewirken die jeweilige Anpassung an die Objektive. Sie bewirken dies durch eine Änderung der Brennweite des Kondensors. Das hat zur Folge, daß die Abbildung der Leuchtfeldblende in die Objektebene nach jeder Kondensorumschaltung neu eingestellt werden muss.

Dazu müssen entweder der Grundkondensor und der Kollektor verschiebbar angeordnet sein oder es ist nur der Kollektor verschiebbar, und die zur Abbildung der Leuchtfeldblende notwendige Verschiebung des Grundkondensors wird durch ein zusätzliches Linsenglied ausgeglichen. Die bei einer Kondensorumschaltung erforderlichen Verschiebungen sind aufwendig und behindern ein zügiges Arbeiten mit häufigem Objektivwechsel.

Aus der DE 21 16 625 ist eine Beleuchtungseinrichtung mit zusätzlich schaltbaren Kondensorlinsen bekannt, bei der nach Kondensorumschaltung ohne Verschieben des Kollektors und des Grundkondensors für jede zusätzlich eingeschaltete Kondensorlinse die Scharfabbildung der Leuchtfeldblende und die Lage des Lichtquellenbildes, also die Köhlersche Beleuchtung, erhalten bleibt. Es ist jedoch weiterhin für jedes Objektiv eine unterschiedliche Einstellung der Öffnung der Leuchtfeldblende und der Aperturblende erforderlich, was bei Arbeiten mit häufigem Objektivwechsel hinderlich ist.

Der Erfindung liegt daher die Aufgabe zugrunde, eine Beleuchtungseinrichtung für Mikroskope zum Wechsel zwischen großer Beleuchtungsapertur und kleinem Leuchtfeld einerseits und kleiner Beleuchtungsapertur und großem Leuchtfeld andererseits zu schaffen, bei der nicht nur in beiden schaltbaren Beleuchtungsarten die Bildlagen sowohl der Leuchtfeldblende als auch der Lichtquelle unverändert bleiben sollen, sondern bei der zusätzlich durch die beiden Schaltstellungen ohne Verstellung der Öffnung der Leuchtfeldblende und der Aperturblende eine schnelle automatische Anpassung der Beleuchtung beim Wechsel von einem schwach vergrössernden Übersichtsobjektiv zu einem hochvergrößernden Objektiv erfolgen soll. Dabei soll aus Platz- und Kostengründen der Aufbau des Kondensors soweit wie möglich beibehalten werden, um so auch die üblicherweise im Kondensor angeordneten Funktionselemente, wie z.B. Filter, Prismen usw., nicht mehrfach vorsehen zu müssen.

Diese Aufgabe wird bei einer Beleuchtungseinrichtung der eingangs genannten Art erfindungsgemäß durch die kennzeichnenden Merkmale des Anspruchs 1 gelöst. Vorteilhafte Ausbildungen der Beleuchtungseinrichtung ergeben sich aus den Unteransprüchen.

Durch die Erfindung wird eine Anpassung des Vergrößerungsunterschieds der schaltbaren Kondensorvarianten an die Objektivvergrößerungsreihe erzielt. Für alle Objektivpaare, deren Vergrößerungen in demselben Verhältnis stehen wie die Vergrößerungen des Kondensors in den beiden Schaltstellungen, sind bei richtig eingestellter Köhlerscher Beleuchtung die Leuchtfeldblenden- und Aperturblendenstellungen gleich. Daher ist nach einmaliger Einstellung der Öffnung dieser Blenden bei diesen Objektivpaaren ein schnelles Hin- und Herschalten bei vollkommen exakter Beleuchtung möglich. Dadurch ist eine einfache Beleuchtungsautomatik für jeweils zwei Objektivvergrößerungen geschaffen.

Durch Beibehaltung des Grundaufbaus des Kondensors mit feststehendem Grundkondensor können im Kondensorgehäuse eingesetzte Filter, Prismen usw. ohne umständlichen Umbau in beiden Schaltstellungen verwendet werden.

Die Erfindung beruht auf dem Gedanken, einen Grundkondensor mit verschiedenen, wahlweise einsetzbaren Kondensorköpfen zu kombinieren und zusätzlich die üblicherweise im Kondensor vorhandene körperliche Aperturblende zunächst in eine im Kondensor angeordnete, zur Aperturebene konjugierte Ebene abzubilden. Deren Lage kann durch optische Mittel variiert werden , so daß auch bei Kondensorumschaltung eine Beibehaltung der Köhlerschen Beleuchtung gesichert ist, ohne die Öffnung der körperlich vorhandenen Blenden verändern zu müssen und ohne zusätzliche Aperturblenden in den Kondensor einsetzen zu müssen. Dazu wird die körperliche Aperturblende zwischen Kollektor und Leuchtfeldblende eingesetzt und durch eine zusätzliche Zwischenabbildung in eine im Kondensor gelegene, zu ihr konjugierte Ebene abgebildet. Für die Zwischenabbildung werden mindestens zwei Hilfslinsen zwischen Kollektor und Kondensor angeordnet. Je nach Auslegung der Linsen können diese zu beiden Seiten der Apertur- und Leuchtfeldblenden oder zwischen diese geschachtelt vorgesehen werden.

Die Kondensorköpfe werden in ihrer Abbildungsleistung so ausgelegt, daß sie in Verbindung mit dem Grundkondensor bzw. dem Grundkondensor und einem zusätzlichen Kondensorlinsenglied jeweils festgelegte Vergrößerungen ergeben. Dabei werden die Gesamtvergrößerungen des Kondensors in den beiden Schaltstellungen so gewählt, daß sie in demselben Verhältnis stehen wie die Vergrößerungen ausgewählter Objektivpaare.

Vorteilhaft werden solche Objektivpaare ausgewählt, die ein schwach vergrößerndes Übersichtsobjektiv und ein hoch vergrößerndes Objektiv zur Detailbetrachtung enthalten. So ist es möglich, mit einem Vergrößerungsverhältnis von 1:4 in den beiden Kondensorstellungen die Objektivpaare "2,5x und 10x", "5x und 20x" sowie "10x und 40x" jeweils automatisch optimal auszuleuchten. Für jedes Objektivpaar müssen nur einmal zu Beginn der Mikroskopierarbeit die Leuchtfeldblende und die Aperturblende richtig eingestellt werden. Für alle weiteren Umschaltungen der Beleuchtungseinrichtung passend zum gewählten Objektiv ist die Beleuchtung dann automatisch optimal angepasst.

Andere Vergrößerungsverhältnisse der Kondensorstellungen sind ebenso möglich, sofern sie der Vergrößerungsabstufung der Objektive entsprechen. Man bezieht sich dabei vorteilhaft auf häufig umgeschaltete Objektive, wie dies bei Routine-Laboruntersuchungen vorkommt.

Eine vorteilhafte Bauweise der neuen Beleuchtungseinrichtung ergibt sich, wenn für die Umschaltung der beiden Kondensoreinstellungen ein gemeinsames Getriebe vorgesehen ist. Dann werden beim Einschwenken des einen Kondensorkopfes gleichzeitig das Kondensorlinsenglied und der ihm zugeordnete, zusätzliche Kondensorkopf ausgeschwenkt und umgekehrt.

Sowohl das Kondensorlinsenglied als auch die Kondensorköpfe sind vorteilhaft in die Korrektur des jeweils wirksamen Kondensors einzubeziehen.

Bei Mikroskopen mit einer Einrichtung zur Erkennung des aktuell eingeschwenkten Objektivs bietet sich die Möglichkeit einer motorischen Einschaltung der passend zum aktuell eingeschwenkten Objektiv erforderlichen Kondensorstellung an.

Die Erfindung wird anhand der in den Zeichnungen schematisch dargestellten Ausführungsbeispiele erläutert. Es zeigen:
- Fig. 1:: eine Beleuchtungseinrichtung mit großer Apertur und kleinem Leuchtfeld,
- Fig. 2 :: eine Beleuchtungseinrichtung nach Umschaltung zu kleiner Apertur und großem Leuchtfeld mithilfe eines erfindungsgemäß anderen Kondensorkopfes und eines gleichzeitig geschalteten zusätzlichen Kondensorlinsengliedes.

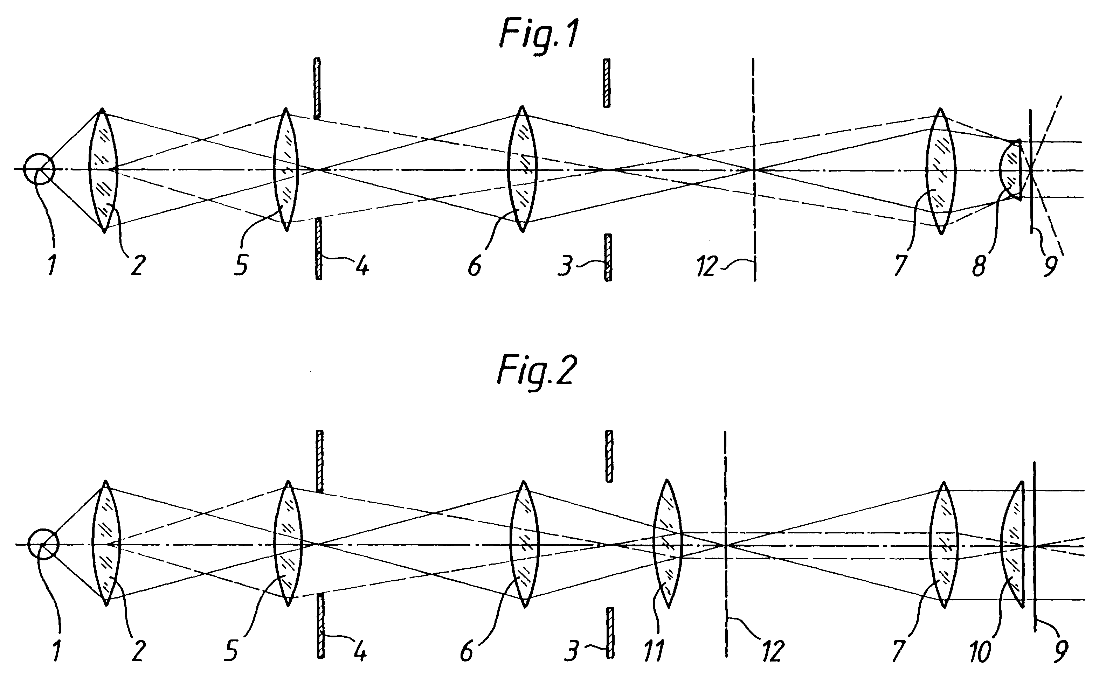

Fig. 1 zeigt die erfindungsgemäße Beleuchtungseinrichtung in der Einstellung für große Aperturen und kleine Leuchtfelder.

Im Lampenteil, bestehend aus Lichtquelle 1, Kollektor 2 und Leuchtfeldblende 3, ist zwischen Leuchtfeldblende 3 und Kollektor 2 erfindungsgemäß die Aperturblende 4 angeordnet. Zwischen dem Kollektor 2 und der Aperturblende 4 ist die erste Hilfslinse 5, zwischen Aperturblende 4 und Leuchtfeldblende 3 die zweite Hilfslinse 6 angeordnet. Eine nachfolgende Linse bildet den Grundkondensor 7.

Die Lichtquelle 1 wird durch den Kollektor 2 und die beiden Hilfslipsen 5;6 sowohl in die Aperturblendenebene als auch in eine zur Aperturblende 4 konjugierte Ebene 12 zwischen Leuchtfeldblende 3 und Grundkondensor 7 abgebildet. Die zur Aperturblende 4 konjugierte Ebene 12 liegt in der hinteren Brennebene des aus Grundkondensor 7 und schaltbarem Kondensorkopf 8 bestehenden Kondensors 7,8. Dieser bildet das Bild der Lichtquelle 1 ins Unendliche sowie die Leuchtfeldblende 3 in die Objektebene 9 ab.

Zur Vergrößerung des durch den ausgezogenen Strahlengang begrenzten Leuchtfeldes in der Objektebene 9 wird der Kondensorkopf 8 aus dem Strahlengang entfernt und dafür erfindungsgemäß der zweite Kondensorkopf 10 sowie das Kondensorlinsenglied 11 eingeschaltet. Fig. 2 zeigt diese Arbeitsstellung der Beleuchtungseinrichtung bei vergrößertem Leuchtfeld und verkleinerter Apertur.

In dieser Arbeitsstellung hat sich unter dem Einfluss des Kondensorlinsengliedes 11 die zur Aperturblende 4 konjugierte Ebene 12 in Richtung der Leuchtfeldblende 3 verschoben. Durch den Kondensor 7,10,11 wird durch geeignete Wahl des zweiten Kondensorkopfes 10 und des Kondensorlinsengliedes 11 die Leuchtfeldblende 3 mit einem entsprechend der Abstufung der Objektivvergrößerungen gewählten Vergrößerungsfaktor scharf in die Objektebene 9 abgebildet. Das Lichtquellenbild erscheint wieder im Unendlichen.

Um denselben Faktor, um den das Leuchtfeld vergrößert wird, wird die Apertur verringert. Die Einstellungen der Leuchtfeldblende 3 und der Aperturblende 4 brauchen bei der Umschaltung des Kondensors nicht mehr verändert werden, nachdem sie zu Beginn der Mikroskopiertätigkeit einmal entsprechend der Köhlerschen Beleuchtung eingestellt wurden.

### BEZUGSZEICHENLISTE

- 1: Lichtquelle
- 2: Kollektor
- 3: Leuchtfeldblende
- 4: Aperturblende
- 5: erste Hilfslinse
- 6: zweite Hilfslinse
- 7: Grundkondensor
- 8: Kondensorkopf
- 9: Objektebene
- 10: zweiter Kondensorkopf
- 11: Kondensorlinsenglied
- 12: zur Aperturblende konjugierte Ebene

## Patentansprüche

1. Beleuchtungseinrichtung für Mikroskope mit
- einem feststehenden Lampenteil (1,2,3) mit Kollektor (2) und Leuchtfeldblende (3),
- einem feststehenden Grundkondensor (7),
- einem einschaltbaren Kondensorkopf (8),
- einer Aperturblende (4) und
- einem zwischen Lampenteil (1,2,3) und Grundkondensor (7) angeordneten, schaltbaren, bei Kondensorumschaltung gleichzeitig die Bildlage sowohl der Leuchtfeldblende (3) als auch der Lichtquelle (1) festhaltenden Kondensorlinsenglied (11),
**dadurch gekennzeichnet,**
**daß** die Aperturblende (4) zwischen Kollektor (2) und Leuchtfeldblende (3) angeordnet ist,
**daß** zwischen Kollektor (2) und Grundkondensor (7) mindestens zwei Hilfslinsen (5,6) angeordnet sind, von denen die erste im Zusammenwirken mit dem Kollektor (2) die Lichtquelle in die Apertur blenden ebene abbildet und die beide die Lichtquelle in eine zur Aperturblende (4) konjugierte Ebene (12) im Kondensor abbilde und zusätzlich den Kollektor (2) in die Leuchtfeldblendenebene abbilden,
**daß** das Kondensorlinsenglied (11) zwischen Leuchtfeldblende (3) und zur Aperturblende (4) konjugierte Ebene (12) eingeschaltet wird und
**daß** ein zweiter, gleichzeitig mit dem Kondensorlinsenglied (11) und alternativ zum ersten Kondensorkopf (8 ) schaltbarer zweiter Kondensorkopf (10) vorgesehen ist, wobei die Gesamtvergrößerungen der Kondensoren (7,8;7,10,11) in den beiden Schaltstellungen in einem festen Verhältnis entsprechend der Abstufung von schaltbaren Objektivvergrößerungen stehen.

2. Beleuchtungseinrichtung für Mikroskope nach Anspruch 1,
**dadurch gekennzeichnet,**
**daß** für das Ändern des Kondensors (7,8) und das gleichzeitige Einschalten des zweiten Kondensorkopfes (10) sowie des Kondensorlinsengliedes (11) ein gemeinsames Getriebe vorgesehen ist.

3. Beleuchtungseinrichtung für Mikroskope nach Anspruch 1,
**dadurch gekennzeichnet,**
**daß** das eingeschaltete Kondensorlinsenglied (11) und /oder der jeweils eingeschaltete Kondensorkopf (8;10) in die Korrektur des jeweils wirksamen Kondensors (7,8;7,10,11) einbezogen sind.

4. Beleuchtungseinrichtung für Mikroskope nach Anspruch 1,
**dadurch gekennzeichnet,**
**daß** eine Logikschaltung zur Zuordnung der erforderlichen Kondensoreinstellung zu einer Statusmeldung einer am Mikroskop vorhandenen Einrichtung zur Erkennung des aktuell eingeschwenkten Objektivs vorgesehen ist und
**daß** ein von der Logikschaltung aktivierbares motorisches Getriebe zur Herstellung der aktuell erforderlichen Kondensoreinstellung vorgesehen ist.

## Claims

1. Illumination equipment for microscopes with
- a stationary lamp part (1, 2, 3) with condenser (2) and light field stop (3),
- a stationary basic condenser (7),
- a condenser head (8) capable of being switched in,
- an aperture stop (4) and
- a switchable condenser lens member (11), which is arranged between the lamp part (1, 2, 3) and the basic condenser (7) and which on switching over of the condenser at the same time also retains the image position of the light field stop (3) as well as also of the light source (1),
characterised thereby,
that the aperture stop (4) is arranged between the condenser (2) and the light field stop (3),
that at least two auxiliary lenses (5, 6), of which the first in cooperation with
the condenser (2) images the light source into the aperture stop plane and which both image the light source into a plane (12), which is conjugate with the aperture stop (4), in the condenser and additionally image the condenser (2) into the light field stop plane, are arranged between the condenser (2) and the basic condenser (7),
that the condenser lens member (11) is switched into between the light field stop (3) and the plane (12), which is conjugate with the aperture stop (4), and
that a second condenser head (10) is provided, which is switchable simultaneously with
the condenser lens member (11) and alternatively to the first condenser head (8), wherein the total magnifications of the condensers (7, 8; 7, 10, 11) in both the switch settings stand in a fixed ratio according to the gradation of switchable objective enlargements.

2. Illumination equipment for microscopes according to claim 1, characterised thereby, that a common gear is provided for the changing of the condenser (7, 8) and the simultaneous switching-in of the second condenser head (10) as well as of the condenser lens member (11).

3. Illumination equipment for microscopes according to claim 1, characterised thereby, that the switched-in condenser lens member (11) and/or the respectively switched-in condenser head are included in the correction of the respectively effective condenser.

4. Illumination equipment for microscopes according to claim 1, characterised thereby, that a logic circuit is provided for the association of the required condenser setting with a status report of an equipment, which is present at the microscope, for the recognition of the actually pivoted-in objective and that a motorised gear device, which is activatable by the logic circuit, is provided for the production of the actually required condenser setting.

## Revendications

1. Dispositif d'éclairage pour microscopes avec
une partie de lampe stationnaire (1, 2, 3) avec collecteur (2) et diaphragme de champ visuel (3).
Un condenseur de base stationnaire (7)
une tête de condenseur pouvant être mise en circuit (8)
un diaphragme d'ouverture (4) et
un organe de lentille de condenseur (11) agencé entre la partie de lampe (1, 2, 3) et le condenseur de base (7), commutable, maintenant, lors du changement de condenseur, en même temps la position de l'image de diaphragme du champ visuel (3) et également de la source de lumière (1),
caractérisé en ce que
le diaphragme d'ouverture (4) est agencé entre le collecteur (2) et le diaphragme de champ visuel (3).
En ce qu'entre le collecteur (2) et le condenseur de base (7) sont agencées au moins deux lentilles auxiliaires (5, 6), dont la première représente, en coopération avec le collecteur (2), la source de lumière dans le plan du diaphragme d'ouverture et les deux représentent la source de lumière dans un plan (12) conjugué au diaphragme d'ouverture (4) dans le condenseur et de plus, le collecteur (2) dans le plan de champ visuel,
en ce que l'organe de lentille de condenseur (11) est incorporé entre le diaphragme de champ visuel (3) et le plan (12) conjugué au diaphragme d'ouverture (4),
en ce qu'une seconde tête de condenseur (10) est prévue en même temps que l'organe de lentille et de condenseur (11) et en alternative avec la première tête de condenseur (8), laquelle est commutable, ce par quoi les grossissements totaux des condenseurs (7, 8 ; 7, 10, 11) dans les deux positions de commutation restent à un rapport fixe correspondant à la gradation des grossissements d'objectifs commutables.

2. Dispositif d'éclairage pour microscopes selon la revendication 1, caractérisé en ce que pour la modification du condenseur (7, 8) et la mise en circuit simultanée de la seconde tête de condenseur (10) ainsi que de l'organe de lentille de condenseur (11), un entraînement commun est prévu.

3. Dispositif d'éclairage pour microscopes selon la revendication 1, caractérisé en ce que
l'organe de lentille de condenseur (11) mis en circuit et/ou la tête de condenseur mise en circuit (8 ; 10) sont pris en compte dans la correction de chaque condenseur effectif (7, 8 ; 7, 10, 11).

4. Dispositif d'éclairage pour mircoscopes selon la revendication 1, caractérisé en ce que
un circuit logique est prévu pour l'affectation de l'ajustement nécessaire du condenseur selon une indication d'état d'un dispositif prévu sur le microscope pour la reconnaissance de l'objectif réellement mis en circuit et en ce qu'un entraînement motorisé pouvant être actionné par le circuit logique est prévu pour la production de l'ajustement réel nécessaire du condenseur.
